# EUROPÄISCHE PATENTSCHRIFT

(11) **EP 3 551 981 B1**
(45) Veröffentlichungstag und Bekanntmachung des Hinweises auf die Patenterteilung: **20.09.2023**
(21) Anmeldenummer: 17797572.9
(22) Anmeldetag: 30.10.2017
(51) Int. Cl.: G01K 15/00

(54) **VERFAHREN ZUR IN SITU KALIBRIERUNG EINES THERMOMETERS**
METHOD FOR THE IN-SITU CALIBRATION OF A THERMOMETER
PROCÉDÉ D'ÉTALONNAGE IN SITU D'UN THERMOMÈTRE

(30) Priorität: 08.12.2016 DE 102016123856
(43) Veröffentlichungstag der Anmeldung: 16.10.2019
(73) Patentinhaber: Endress+Hauser Wetzer GmbH+Co. KG, 87484 Nesselwang (DE)
(72) Erfinder: SCHALLES, Marc, 99097 Erfurt (DE)
(74) Vertreter: Koslowski, Christine Adelheid
(86) Internationale Anmeldenummer: PCT/EP2017/077743
(87) Internationale Veröffentlichungsnummer: WO 2018/103949

(56) Entgegenhaltungen:
- DE-A1-102015 112 425
- US-A1- 2005 025 212
- US-A1- 2012 051 389

## Beschreibung

Die Erfindung bezieht sich auf ein Verfahren zur in situ Kalibrierung und/oder Validierung eines Thermometers mit zumindest einem Temperatursensor und zumindest einem Referenzelement, welches Referenzelement zumindest teilweise aus einem Material besteht, für welches Material innerhalb des für den Betrieb des Thermometers relevanten Temperaturbereichs zumindest ein Phasenübergang bei zumindest einer vorgegebenen Phasenübergangstemperatur auftritt bei welchem Phasenübergang das Material in der festen Phase verbleibt.

Thermometer sind in unterschiedlichsten Ausgestaltungen verfügbar. So gibt es Thermometer, welche zur Messung der Temperatur die Ausdehnung einer Flüssigkeit, eines Gases oder eines Festkörpers mit bekanntem Ausdehnungskoeffizienten heranziehen, oder auch solche, welche die elektrische Leitfähigkeit eines Materials mit der Temperatur in Zusammenhang bringen, wie beispielsweise bei Verwendung von Widerstandselementen oder Thermoelementen. Dagegen wird bei Strahlungsthermometern, insb. Pyrometern, zur Bestimmung der Temperatur einer Substanz deren Wärmestrahlung ausgenutzt. Die jeweils zugrundeliegenden Messprinzipien sind jeweils in einer Vielzahl von Veröffentlichungen beschrieben worden und werden entsprechend hier nicht im Einzelnen detailliert wiedergegeben.

Die Kalibrierung und/oder Validierung eines Thermometers wird üblicherweise in Kalibrierbädern, Öfen oder Fixpunkteinrichtungen durchgeführt. Sie erfolgt dann häufig anhand einer Vergleichsmessung in einem Vergleichsmedium mit einer bekannten Vergleichstemperatur, d.h. bei einem festen charakteristischen Temperaturpunkt, wie beispielsweise dem Tripel- und/oder Schmelzpunkt eines Materials. Alternativ kann eine Kalibrierung und/oder Validierung auch mittels eines Referenzthermometers, beispielsweise umfassend ein Platin-Element, durchgeführt werden, vorzugsweise anhand des internationalen Standards ITS-90.

Als typisches Vergleichsmedium wird häufig deionisiertes Eiswasser in einem Dewar-Gefäß eingesetzt. Dieser charakteristische Temperaturpunkt wird unter anderem häufig genutzt, um den sogenannten R₀-Wert (R bei T=0°C) eines Widerstandstemperatursensors (RTD- Element für Resistance Temperature Detector) in Form eines Platinelements nach dem internationalen Standard IEC60751 zu bestimmen, wie beispielsweise für ein sogenanntes Pt100 Element.

Üblicherweise muss ein Thermometer zur Durchführung einer Vergleichsmessung aus dem jeweiligen Prozess entfernt werden. Es sind jedoch auch Vorrichtungen bekannt geworden, die eine in situ Kalibrierung und/oder Validierung eines Thermometers ermöglichen, wie beispielsweise die in der DE 19941731 A1 beschriebene, miniaturisierte und in ein Thermometer integrierte Fixpunktzelle.

Eine weitere Möglichkeit zur Kalibrierung und/oder Validierung eines Thermometers besteht darin, bestimmte charakteristischer Temperaturpunkte oder Kennlinien des jeweiligen Thermometers heranzuziehen. So ist in der EP1247268B2 beispielsweise ein Verfahren zur in situ Kalibrierung mehrerer integrierter Temperatursensoren anhand von Kennlinien eines oder mehrerer Referenzelemente in Form von sekundären Temperatursensoren beschrieben, welche Referenzelemente in einen Thermometereinsatz zusätzlich zu einem primären Temperatursensor eingebaut sind. Damit eine Kalibrierung erfolgen kann, unterscheiden sich die jeweils verwendeten Referenzelemente in Bezug auf den Aufbau und/oder das jeweils verwendete Material vom primären Temperatursensor, was in unterschiedlichen Kennlinienverläufen resultiert. Nachteilig hierbei ist jedoch, dass üblicherweise auch die Kennlinien der Referenzelemente Alterungseffekten und/oder Sensordrift unterliegen.

Zur Vermeidung derartiger Nachteile sind aus der DE102010040039A1 eine Vorrichtung und ein Verfahren zur in situ Kalibrierung eines Thermometers mit einem Temperatursensor und einem Referenzelement zur Kalibrierung des Temperatursensors bekannt geworden, bei welcher das Referenzelement wenigstens teilweise aus einem ferroelektrischen Material besteht, welches im zur Kalibrierung des Temperatursensors relevanten Temperaturbereich eine Phasenumwandlung bei zumindest einer vorgegebenen Temperatur erfährt. Die Kalibrierung wird also anhand des charakteristischen Temperaturpunkts eines Phasenübergangs eines ferroelektrischen Materials, also anhand einer materialspezifischen Eigenschaft vorgenommen. Je nach Anzahl der verbauten Referenzelemente kann auf diese Weise sowohl eine sogenannte 1-Punkt- als auch eine Mehrpunkt- Kalibrierung und/oder Validierung vorgenommen werden. Eine ähnliche, insbesondere für Mehrpunkt-Kalibrierungen geeignete Vorrichtung, ist ferner aus der bisher unveröffentlichten deutschen Patentanmeldung mit dem Aktenzeichen 102015112425.4 bekannt geworden. Das dort beschriebene Thermometer umfasst zumindest einen Temperatursensor und zumindest zwei über genau zwei Anschlussdrähte kontaktierte Referenzelemente, welche zumindest teilweise aus zwei unterschiedlichen Materialien bestehen, für welche Materialien jeweils im zur Kalibrierung des Temperatursensors relevanten Temperaturbereich zumindest ein Phasenübergang zumindest zweiter Ordnung bei jeweils einer vorgegebenen Phasenübergangstemperatur auftritt. Auf die DE102010040039A1 sowie auf die Patentanmeldung mit dem Aktenzeichen 102015112425.4 wird im Folgenden vollumfänglich Bezug genommen.

Üblicherweise wird eine Vergleichsmessung zur Kalibrierung und/oder Validierung eines Thermometers stets gesondert vom jeweiligen Prozess durchgeführt. Die jeweils zur Kalibrierung aufgenommenen Messwerte können gegebenenfalls in einem Kalibrierprotokoll festgehalten werden. Eine gesonderte Vergleichsmessung erfordert nachteilig jedoch stets mehrere Arbeitsschritte. Ausgehend von dem genannten Stand der Technik liegt der vorliegenden Erfindung die Aufgabe zugrunde, ein besonders einfaches Verfahren zur in situ Kalibrierung und/oder Validierung eines Thermometers anzugeben.

US2012051389 beschreibt ein Verfahren und eine Vorrichtung zur in situ Kalibrierung eines Thermometers.

Diese Aufgabe wird gelöst durch das Verfahren gemäß Anspruch 1 und durch eine zur Durchführung des Verfahrens geeignete Vorrichtung gemäß Anspruch 10.

Das erfindungsgemäße Verfahren dient der in situ Kalibrierung und/oder Validierung eines Thermometers mit zumindest einem Temperatursensor und zumindest einem Referenzelement, welches Referenzelement zumindest teilweise aus einem Material besteht, für welches Material innerhalb des für den Betrieb des Thermometers relevanten Temperaturbereichs zumindest ein Phasenübergang bei zumindest einer vorgegebenen Phasenübergangstemperatur auftritt, bei welchem Phasenübergang das Material in der festen Phase verbleibt. Der Temperatursensor (Primärsensor) wird also mit Hilfe eines Sekundärsensors (Referenzelement) kalibriert und/oder validiert. Dabei kann es sich beispielsweise um ein Thermometer entsprechend einer oder mehrerer der möglichen Ausgestaltungen gemäß der Offenlegungsschrift DE102010040039A1 oder der bisher unveröffentlichten deutschen Patentanmeldung mit dem Aktenzeichen 102015112425.4 handeln.

Das Verfahren umfasst zumindest die Verfahrensschritte gemäß Anspruch 1.

Im Falle, dass die zur Kalibrierung und/oder Validierung anhand des Vergleichs der Sensortemperatur und der Phasenübergangstemperatur bestimmte Abweichung einen vorgebbaren Grenzwert überschreitet, kann beispielsweise eine Justierung einer Kennlinie des Sensorelements vorgenommen werden. Dies kann beispielsweise durch Bereitstellen einer Rechenvorschrift, vorzugsweise für eine Kennlinien-Korrektur, erreicht werden, bei welcher unter anderem ein Offset, eine Steigung, eine Krümmung, und/oder ein für die Kennlinie des jeweiligen Thermometers anderer relevanter Parameter angepasst bzw. geändert werden kann/können. Im Falle, dass mehrere Phasenübergangstemperaturen mit unterschiedlichen Sensortemperaturen verglichen werden, also im Falle eine Mehrpunkt-Kalibrierung und/oder-Validierung, kann darüber hinaus mehr als ein Parameter einer Sensorkennlinie anhand der jeweiligen Abweichungen der einzelnen Sensortemperaturen von den jeweiligen Phasenübergangstemperaturen angepasst bzw. geändert werden.

Grundsätzlich kann eine Kalibrierung und/oder Validierung einerseits automatisch ausgelöst werden. Es kann beispielswiese aber auch eine Meldung über das Bestehen einer Abweichung generiert und/oder ausgegeben werden. Es sei darauf verwiesen, dass für die in Folge einer detektierten Abweichung vornehmbaren Schritte viele verschiedene Möglichkeiten denkbar sind, welche allesamt unter die vorliegende Erfindung fallen.

Es sei ferner darauf verwiesen, dass eine vorliegende Abweichung zwischen der mittels des Temperatursensors gemessenen Sensortemperatur und der Phasenübergangstemperatur ggf. nicht ausschließlich durch den Temperatursensor selbst verursacht wird. Vielmehr handelt es sich um eine durch das gesamte Thermometer verursachte Gesamt-Abweichung, in welche neben Einflüssen des Sensorelements ebenfalls Einflüsse durch Kontaktierungen, Anschlussleitungen, oder einer oder mehrerer Komponenten innerhalb der Elektronikeinheit eingehen können. Darüber hinaus können ebenfalls Einflüsse der Umgebung des Thermometers, eine Rolle spielen.

Ein Phasenübergang, bei welchem das jeweilige Material in der festen Phase verbleibt, ist insbesondere ein Phasenübergang von der ferromagnetischen in die paramagnetische Phase oder umgekehrt, von der ferroelektrischen in die paraelektrische Phase oder umgekehrt, oder auch von einem Normalmetall zu einem Supraleiter oder umgekehrt.

Bei einem Phasenübergang in einem Material, welches Material in der festen Phase verbleibt, handelt es sich beispielsweise nach der Ehrenfestklassifikation um einen Phasenübergang zumindest zweiter Ordnung. Im Unterschied zu einem Phasenübergang erster Ordnung wird keine oder nur eine vernachlässigbare Menge latenter Wärme während des Phasenübergangs frei. Wenn keine oder nur eine vernachlässigbare Menge an latenter Wärme frei wird, kann - grundsätzlich und unabhängig von der gewählten Klassifikation für Phasenübergänge - unter anderem vorteilhaft gewährleistet werden, dass die mittels des Temperatursensors gemessene Temperatur zum Zeitpunkt des Auftretens eines Phasenübergangs, nicht, insbesondere nicht durch frei werdende latente Wärme, verfälscht wird.

In einer weiteren, heute deutlich gebräuchlicheren Klassifizierung von Phasenübergängen wird lediglich zwischen diskontinuierlichen (1. Ordnung) und kontinuierlichen (2. Ordnung) Phasenübergängen unterschieden [s. z. B. Lexikon der Physik, Spektrum Akademischer Verlag Heidelberg Berlin, Band 4 unter dem Stichwort "Phasenübergänge und andere kritische Phänomene]. Nach dieser Klassifikation wiederum lassen sich beispielsweise verschiedenen ferroelektrischen Materialien sowohl Phasenübergänge 1. als auch 2. Ordnung zuordnen, wobei in beiden Fällen das jeweilige Material, für das ein Phasenübergang stattfindet, während des Phasenübergangs in der festen Phase verbleibt.

Das Verbleiben in der festen Phase ist unabhängig von der gewählten Klassifikation eines Phasenübergangs für die vorliegende Erfindung entscheidend. Weiterhin ist es grundsätzlich von Vorteil, wenn beim Auftreten des Phasenübergangs keine oder nur eine vernachlässigbare Menge an latenter Wärme frei wird.

Grundsätzlich geht ein Phasenübergang mit der Änderung einer spezifischen Materialeigenschaft einher, beispielsweise mit einer Änderung der Kristallstruktur, oder einer Änderung in zumindest einer magnetischen, elektrischen oder dielektrischen Eigenschaft. Im Falle der vorliegenden Erfindung sind die materialspezifischen Änderungen für das jeweilige Referenzelement bekannt und können für eine Kalibrierung und/oder Validierung des Temperatursensors herangezogen werden. Dabei können ein oder mehrere Referenzelemente integriert werden, wobei jedes Referenzelement einen oder mehrere Phasenübergänge aufweisen kann. Jeder Phasenübergang findet bei einem bestimmten charakteristischen fixen und langzeitstabilen Temperaturwert statt, so dass für eine Kalibrierung und/oder Validierung des Temperatursensors mittels des Referenzelements im Prinzip keine Drift und/oder keine Alterungseffekte berücksichtigt werden müssen.

Gemäß einer Ausgestaltung handelt es sich bei dem Material um ein ferroelektrisches Material, um ein ferromagnetisches Material, oder um ein supraleitendes Material.

Eine weitere Ausgestaltung beinhaltet, dass die zumindest eine charakteristische, physikalische oder chemische Größe durch die Kristallstruktur, das Volumen, eine dielektrische, elektrische, oder magnetische Eigenschaft des jeweiligen Materials gegeben ist.

In einer Ausgestaltung des erfindungsgemäßen Verfahrens wird die Sensortemperatur anhand eines Vergleichs zumindest eines von dem Temperatursensor erhaltenen Messwertes mit einer Temperatursensor-Kennlinie ermittelt.

Der Temperatursensor ist beispielsweise durch ein Widerstandselement oder ein Thermoelement gegeben.

Eine weitere Ausgestaltung des Verfahrens beinhaltet, dass aus einer vorliegenden Abweichung zwischen der Sensortemperatur und der Phasenübergangstemperatur auf eine Änderung der Temperatursensor-Kennlinie geschlossen wird. Eine Änderung der Temperatursensor-Kennlinie kann beispielsweise durch Alterungseffekte des Temperatursensors, oder auch durch ein zumindest teilweises Lösen von Kontaktierungen oder ähnlichem hervorgerufen werden. Chemische Reaktionen innerhalb des Thermometers, mechanische Spannungen im Bereich des Sensorelements und/oder der Anschlussdrähte, oder auch eine Änderung von Kennlinien zumindest einer innerhalb der Elektronikeinheit angeordneten, insbesondere elektronischen, Komponenten, können ebenfalls zu einer Änderung der gemessenen Temperatursensor-Kennlinie führen.

Die Erfindung beinhaltet, dass zur Bestimmung einer vorliegenden Abweichung zwischen der Sensortemperatur und der Phasenübergangstemperatur ein Modell der dynamischen Wärmeströmung berücksichtigt. Dabei handelt es sich insbesondere ein Modell, welches eine inhomogene und/oder dynamische Wärmeausbreitung innerhalb des Thermometers berücksichtigt, also am Ort des Temperatursensors und/oder am Ort des Referenzelements. Auch können Effekte einer Wärmeableitung berücksichtigt werden, welche durch Änderungen in der Umgebungstemperatur hervorgerufen werden können. Die Berücksichtigung eines Modells der dynamischen Wärmeströmung ist insbesondere vorteilhaft für den Fall, dass das Thermometer einem zumindest zeitweisen und/oder teilweisen dynamischen und /oder inhomogenen thermischen Umfeld ausgesetzt ist, beispielsweise für eine Anwendung in einem strömenden Medium oder bei variabler Umgebungstemperatur des Thermometers.

Üblicherweise wird ein Sensorkopf, in welchem üblicherweise zumindest der Temperatursensor angeordnet ist, zur Bestimmung und/oder Überwachung der Temperatur eines Mediums mit dem Medium in, insbesondere in thermischen, Kontakt gebracht. Das Referenzelement kann, muss aber nicht, im selben Sensorkopf angeordnet sein. Im fortlaufenden Betrieb findet ein Wärmaustausch zwischen dem Thermometer und dem Medium statt, bis sich ein thermisches Gleichgewicht einstellt. Dann weisen der Temperatursensor und das Referenzelement, sowie das Medium im Wesentlichen die gleiche Temperatur, im Folgenden als Gleichgewichtstemperatur bezeichnet, auf. Es findet eine Wärmeausbreitung vom Medium zum Temperatursensor und zum Referenzelement statt. Unter Wärmeausbreitung wird in diesem Zusammenhang sowohl ein Wärmefluss vom Medium zum Sensorkopf, entsprechend dem Falle, dass das Medium eine höhere Temperatur aufweist als der Sensorkopf, als auch in umgekehrter Richtung, im Falle, dass der Sensorkopf eine höhere Temperatur aufweist, verstanden. Verschiedene Konstellationen, wie beispielsweise eine Verwendung des Thermometers in einem zumindest zeitweisen und/oder teilweisen dynamischen und /oder inhomogenen thermischen Umfeld, oder auch asymmetrische Konfigurationen und/oder geometrische Anordnungen können jedoch dazu führen, dass die am Ort des Temperatursensors und am Ort des Referenzelements vorherrschenden Temperaturen nicht zu jedem Zeitpunkt gleich sind. Der Temperatursensor und das Referenzelement sind also zu bestimmten Zeitpunkten, welche jeweils vor Zeitpunkten liegen, zu welchem sich die Gleichgewichtstemperatur einstellt, unterschiedlichen Temperaturen ausgesetzt. Bei einer Änderung der Temperatur des Mediums von einer ersten Temperatur zu einer zweiten Temperatur sind der Strömungsrichtung zugewandte Elemente des Thermometers zu einem früheren Zeitpunkt der zweiten Temperatur ausgesetzt als der Strömungsrichtung des Mediums abgewandte Elemente. Es versteht sich von selbst, dass eine Vielzahl weiterer Fälle zu einem zumindest zeitweise auftretenden Temperaturunterschied zwischen der Temperatur des Temperatursensors und der Temperatur des Referenzelements führen können.

Wenn außerhalb des thermischen Gleichgewichts der Temperatursensor mittels des Referenzelements kalibriert und/oder validiert wird, können Fehler und/oder Messungenauigkeiten die Folge sein, da die Temperaturen im Bereich des Temperatursensors und des Referenzelements zum Kalibrier- und/oder Validierzeitpunkt nicht identisch sind. Indem jedoch ein Modell der dynamischen Wärmeströmung verwendet wird, können solche Fehler und/oder Messungenauigkeiten vermieden werden, da ein derartiges Modell eine inhomogene Wärmeausbreitung innerhalb des Thermometers, beispielsweise, wenn das Referenzelement und der Temperatursensor zeitweise und/oder teilweise unterschiedlichen Temperaturen ausgesetzt sind, berücksichtigt. Dabei kann es sich einerseits um ein strömendes Medium mit veränderlicher Temperatur handeln, in welchem das Thermometer eingesetzt wird. Aber auch dynamische Temperaturunterschiede aufgrund von Wärmeableitung durch eine variable Umgebungstemperatur des Thermometers, sowie thermische Kopplungseffekte aufgrund der geometrischen Ausgestaltung des Thermometers und der thermischen Eigenschaften der jeweils verwendeten Materialien, können berücksichtigt werden.

Das Modell der dynamischen Wärmeströmung geht vorzugsweise von physikalischen und/oder chemischen Größen, welche insbesondere spezifisch für den jeweiligen Aufbau bzw. die jeweilige Anordnung und die jeweilige Geometrie des Sensors, sowie für die jeweils verwendeten Materialien bzw. der Vorrichtung, insbesondere deren thermophysikalische Eigenschaften und daraus resultierende Wärmetransportvorgänge, sind, aus. Weiterhin können Größen, welche das Medium oder die Umgebungsbedingungen betreffen, wie die Strömungsgeschwindigkeit Dichte, und/oder Viskosität, oder auch die thermische Kopplung des Sensors an die Umgebung, von Bedeutung sein.

Es ist es von Vorteil, wenn anhand des Modells der dynamischen Wärmeströmung ein Zeit-Korrekturwert Δt_{dyn} ermittelt wird, nach welcher das Referenzelement und der Temperatursensor die gleiche Temperatur erreicht haben, wobei zur Bestimmung einer vorliegenden Abweichung zwischen der Sensortemperatur und der Phasenübergangstemperatur der Zeit-Korrekturwert Δt_{dyn} berücksichtigt wird. Die Sensortemperatur wird also nicht direkt aus einem vom Temperatursensor erhaltenen Messwert zu einem Messzeitpunkt, welcher den kürzesten zeitlichen Abstand zum Phasenübergangszeitpunkt aufweist bestimmt und mit der Phasenübergangstemperatur verglichen. Vielmehr wird zuerst zu/von dem Messzeitpunkt oder dem Phasenübergangszeitpunkt die Zeit-Korrekturwert Δt_{dyn} addiert /subtrahiert.

Es ist ebenso von Vorteil, wenn anhand des Modells der dynamischen Wärmeströmung ein Temperatur-Korrekturwert ΔT_{dyn}, ermittelt wird, welcher zu einem bestimmbaren Zeitpunkt zwischen dem Referenzelement und dem Temperatursensor vorliegt, und wobei zur Bestimmung einer vorliegenden Abweichung zwischen der Sensortemperatur und der Phasenübergangstemperatur der Temperatur-Korrekturwert ΔT_{dyn} berücksichtigt wird. Die Sensortemperatur wird also nicht direkt aus einem vom Temperatursensor erhaltenen Messwert zu einem Messzeitpunkt, welcher den kürzesten zeitlichen Abstand zum Phasenübergangszeitpunkt aufweist, bestimmt und mit der Phasenübergangstemperatur verglichen. Vielmehr wird zuerst zu/von dem Messwert, von der daraus ermittelten Sensortemperatur oder der Phasenübergangstemperatur der Temperatur-Korrekturwert ΔT_{dyn} addiert /subtrahiert. Üblicherweise handelt es sich also bei dem Temperatur-Korrekturwert ΔT_{dyn} um einen Temperaturwert. Im Falle, dass der Temperatur-Korrekturwert allerdings zu/von dem vom Temperatursensor erhaltenen Messwert addiert/subtrahiert wird, kann es sich auch um einen Wert mit einer anderen Einheit, beispielsweise um einen elektrischen Strom oder eine elektrische Spannung handeln.

Mittels der beiden zuletzt genannten Ausgestaltungen, betreffend die Ermittlung eines Zeit-Korrekturwerts Δt_{dyn} oder eines Temperatur-Korrekturwerts ΔT_{dyn}, werden also Effekte einer Temperaturänderungsrate, welche das jeweils vorherrschende thermische Umfeld des Thermometers beschreibt, berücksichtigt. Im Falle konstanter Temperaturänderungsraten ist insbesondere eine vorliegende Abweichung zwischen der Sensortemperatur und der Phasenübergangstemperatur zu einem bestimmbaren Zeitpunkt proportional zu der Temperaturänderungsrate.

In einer weiteren Ausgestaltung handelt es sich bei dem Modell der dynamischen Wärmeströmung um ein parametrisches Modell. Das Modell ist vorzugsweisedazu geeignet, einen Wert für den Zeit-Korrekturwert Δt_{dyn} und/oder den Temperatur-Korrekturwert ΔT_{dyn} anzugeben. In dem parametrischen Modell verwendete Parameter müssen nicht notwendigerweise physikalischen und/oder chemischen Größen entsprechen.

Die Parameter werden beispielsweise mittels eines Schätzverfahrens ermittelt. Solche Schätzverfahren sind an sich hinlänglich aus dem Stand der Technik bekannt und werden deshalb an dieser Stelle nicht im Detail erläutert. Die Abschätzung eines Wertes für einen Parameter kann beispielswese anhand einer definierten Änderung einer Eingangsgröße, insbesondere einer eine Wärmeströmung im Umfeld des Thermometers, eine Strömung eines Mediums oder eine Temperatur oder Temperaturänderungsrate, insbesondere die Temperatur des Mediums, repräsentierenden Eingangsgröße, und mittels zumindest eines mit dem Temperatursensor gemessenen Messwerts, erfolgen. Eine Bestimmung der Parameter im jeweiligen Prozess, ist, sofern die jeweilige Eingangsgröße hinreichend bekannt ist, ebenfalls möglich.

Die erfindungsgemäße Aufgabe wird ferner gelöst durch eine Vorrichtung zur in situ Kalibrierung und/oder Validierung eines Thermometers umfassend zumindest einen Temperatursensor, ein Referenzelement, welches Referenzelement zumindest teilweise aus einem Material besteht, für welches Material innerhalb des für den Betrieb des Thermometers relevanten Temperaturbereichs zumindest ein Phasenübergang zumindest zweiter Ordnung bei zumindest einer vorgegebenen Phasenübergangstemperatur auftritt, und eine Elektronikeinheit, welche Elektronikeinheit dazu ausgestaltet ist, zumindest eine Ausgestaltung des erfindungsgemäßen Verfahrens auszuführen.

Es sei darauf verwiesen, dass die in Zusammenhang mit dem Verfahren beschriebenen Ausgestaltungen mutatis mutandis auch auf die erfindungsgemäße Vorrichtung anwendbar sind.

Die Erfindung wird anhand der nachfolgenden Zeichnungen näher erläutert. Gleiche Elemente der Vorrichtung sind jeweils mit demselben Bezugszeichen versehen. Es zeigt:
Fig. 1: eine schematische Darstellung eines Thermometers mit einem Temperatursensor und einem separat kontaktierten Referenzelement zur Bestimmung und/oder Überwachung der Temperatur eines strömenden Mediums gemäß Stand der Technik,
Fig. 2: eine Illustration einer ersten Ausgestaltung des erfindungsgemäßen Verfahrens, und
Fig. 3: eine Illustration einer zweiten Ausgestaltung des erfindungsgemäßen Verfahrens, welches ein dynamisches Modell der Wärmeströmung berücksichtigt.

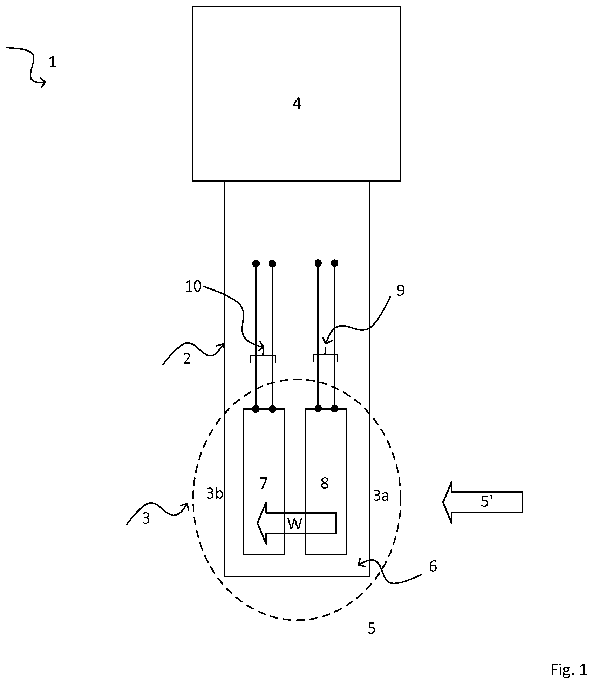

In Fig.1 ist eine schematische Abbildung eines Thermometers 1 mit einem Schutzrohr 2 und einer Elektronikeinheit 3 gemäß Stand der Technik gezeigt. Der dem jeweiligen Medium 5 zugewandte Teilbereich des Schutzrohres 2 wird auch als Sensorkopf 3 bezeichnet. Das Innenvolumen des Sensorkopfes 3 ist mit einem, insbesondere elektrisch isolierenden, Füllstoff 6, insbesondere einem Zement, gefüllt. Ferner sind im Inneren des Sensorkopfes 3 ein Temperatursensor 7 und ein Referenzelement 8 angeordnet, welche jeweils mittels zwei Anschlussdrähten, 9,10, insbesondere elektrisch, kontaktiert und mit der Elektronikeinheit 4 verbunden sind. Bei dem Temperatursensor 7 handelt es sich beispielsweise um ein Widerstandselement oder um ein Thermoelement. Das Referenzelement 8 wiederum besteht zumindest teilweise aus einem Material, für welches Material innerhalb des für den Betrieb der Vorrichtung relevanten Temperaturbereichs zumindest ein Phasenübergang zumindest zweiter Ordnung bei zumindest einer vorgegebenen Phasenübergangstemperatur auftritt. Die Anzahl der notwendigen Anschlussdrähte 9,10 zur Kontaktierung des Referenzelements und des Temperatursensors 7,8 kann je nach Art des angewendeten Messprinzips variieren. In der gezeigten Ausgestaltung sind der Temperatursensor 7 und das Referenzelement 8 voneinander beabstanded innerhalb des Sensorkopfes 3 angeordnet. Sie können aber ebenfalls in direktem Kontakt miteinander stehen und beispielsweise miteinander verlötet sein.

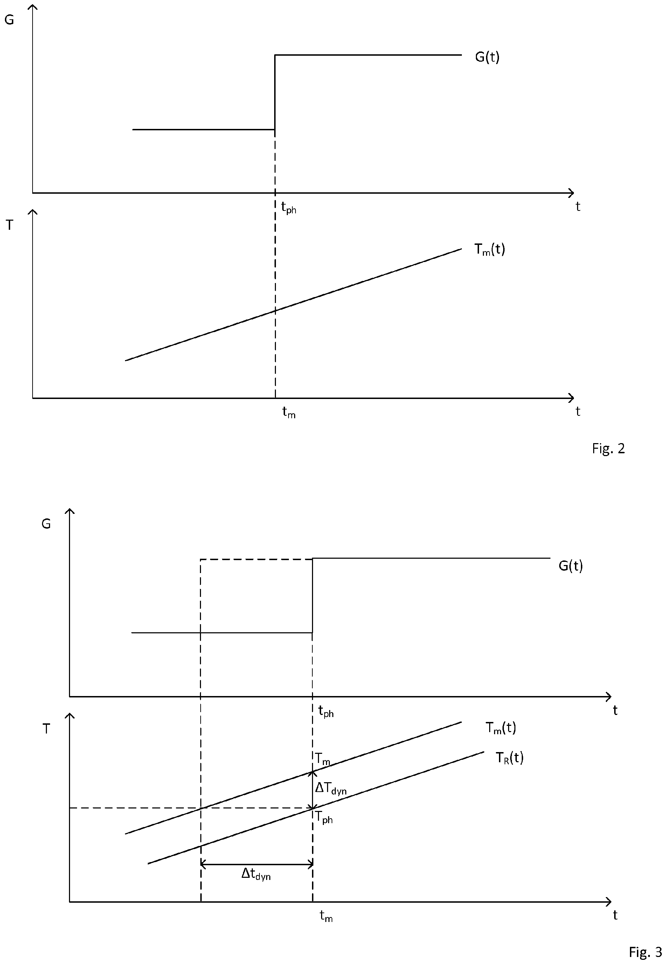

Wie der Temperatursensor 7 mittels des Referenzelements 8 anhand des erfindungsgemäßen Verfahrens kalibriert und/oder validiert werden kann, ist in Fig. 2 illustriert. Das obere Diagramm zeigt den Verlauf einer zur Detektion des Phasenübergangs verwendeten charakteristischen physikalischen oder chemischen Größe G. Findet in dem Referenzelement 8 ein Phasenübergang statt, so erfolgt in dem gezeigten Beispiel eine sprunghafte Änderung der Größe G. Der Zeitpunkt, zu welchem die sprunghafte Änderung der Größe detektiert wird, ist der Phasenübergangszeitpunkt tₚₕ, zu welchem das Referenzelement 8 die Phasenübergangstemperatur Tₚₕ aufweist.

Im unteren Diagramm ist die mittels des Temperatursensors 7 ermittelte Sensortemperatur T als Funktion der Zeit t dargestellt. Zur Kalibrierung und/oder Validierung des Temperatursensors 7 anhand des Referenzelements 8 wird derjenige Messzeitpunkt tₘ ermittelt, welcher den kürzesten zeitlichen Abstand zum Phasenübergangszeitpunkt tₚₕ aufweist. Die dem Messzeitpunkt tₘ entsprechende Sensortemperatur Tₘ wird mit der Phasenübergangstemperatur Tₚₕ verglichen und im Falle einer Abweichung ΔT= Tₘ(tₘ)-Tₚₕ(tₚₕ) über einen vorgebbaren Grenzwert hinaus kann das Thermometer 1 automatisch kalibriert und/oder validiert werden und/oder eine Meldung über das Bestehen einer Abweichung generiert und/oder ausgegeben werden.

Zum Zwecke einer hohen Messgenauigkeit gilt es zu gewährleisten, dass der Temperatursensor 7 und das Referenzelement 8 im Idealfall zu jedem Zeitpunkt im thermischen Gleichgewicht sind. Um dies zu erreichen, werden üblicherweise verschiedene Maßnahmen durchgeführt, von denen einige im Folgenden beispielhaft aufgelistet sind:
1. Der Temperatursensor 7 und das Referenzelement 8 sind innerhalb des Sensorkopfes 3 symmetrisch, insbesondere symmetrisch zu einer gedachten in Längsrichtung des Schutzrohres 2 durch einen Mittelpunkt des Schutzrohres 2 verlaufenden Achse, angeordnet.
2. Der Temperatursensor 7 und das Referenzelement 8 sind möglichst gut thermisch gekoppelt (z.B. verlötet).
3. Ggf. für den Temperatursensor 7 und/oder das Referenzelement verwendete Trägersubstrate weisen im Wesentlichen dieselbe thermische Leitfähigkeit auf.
4. Der Temperatursensor 7 und das Referenzelement 8 sind derart ausgestaltet, dass sie im Wesentlichen dieselbe thermische Kapazität aufweisen.
5. Der Füllstoff 6 und/oder im Bereich des Sensorkopfes 3 angeordnete Trennwände [nicht eingezeichnet] sind derart beschaffen, dass sie eine isotrope und/oder homogene Wärmeausbreitung innerhalb des Sensorkopfes 3 gewährleisten.
6. Alle Komponenten zumindest des Sensorkopfes 3 sind derart ausgestaltet, dass sie eine möglichst hohe thermische Leitfähigkeit aufweisen.
7. Die Anschlussdrähte 9,10 sind so ausgestaltet, dass eine über die Anschlussdrähte 9,10 stattfindende Wärmeleitung minimal, und vorzugsweise über jeden Anschlussdraht 9,10 im Wesentlichen identisch ist.

Selbst bei größter Sorgfalt in Bezug auf die Herstellung eines Thermometers 1 können jedoch verschiedene Fälle auftreten, in welchen der Temperatursensor 7 und das Referenzelement 8 zumindest zeitweise nicht im thermischen Gleichgewicht und entsprechend unterschiedlichen Temperaturen ausgesetzt sind. Dies wiederum kann zu erheblichen Fehlern und/oder Messungenauigkeiten bei einer Kalibrierung und/oder Validierung des Temperatursensors 7 mittels des Referenzelements 8 führen.

Um den genannten Problematiken begegnen zu können, wird in einer weiteren Ausgestaltung des erfindungsgemäßen Verfahrens ein dynamisches Modell der Wärmeströmung bzw. Wärmeausbreitung berücksichtigt, wie beispielhaft in Fig. 3 illustriert. Das Modell ist dabei jeweils auf die spezifische Applikation des Thermometers 1 angepasst und berücksichtigt beispielsweise eine ggf. vorhandene Wärmeströmung, eine Temperatur oder auch eine Temperaturänderungsrate des Mediums 5 oder der Umgebung des Thermometers, die Wärmeleitfähigkeiten und/oder Wärmekapazitäten der jeweils für das Thermometer 1 verwendeten Materialien bzw. Komponenten, geometrische Abmessungen innerhalb des Thermometers, und/oder die Eintauchtiefe des Thermometers in das jeweilige Medium.

Die folgende Beschreibung bezieht sich dabei auf den Fall, dass das Thermometer 1 zur Bestimmung der Temperatur eines strömenden Mediums 5 eingesetzt wird. Das Thermometer 1 sei dabei derart mit dem strömenden Medium 5 in Kontakt, dass der Temperatursensor 7 im dem strömenden Medium 5 zugewandten Bereich angeordnet ist und das Referenzelement 8 im dem Medium 5 abgewandten Bereich. In diesem Falle wird bei einer Temperaturänderung von einer ersten T₁ zu einer zweiten T₂ Temperatur der Temperatursensor 7 die zweite Temperatur T₂ stets zu einem früheren Zeitpunkt erreichen als das Referenzelement 8.

Wird zu einem Zeitpunkt tₚₕ das Stattfinden eines Phasenübergangs detektiert, entspricht die Temperatur des Referenzelements 8 zu diesem Zeitpunkt der Phasenübergangstemperatur Tₚₕ. Aus einem direkten Vergleich der Phasenübergangstemperatur Tₚₕ mit der Sensortemperatur Tₘ des Temperatursensors 7 zu einem Messzeitpunkt tₘ, welcher den kürzesten zeitlichen Abstand zum Phasenübergangszeitpunkt tₚₕ aufweist, kann allerdings keine korrekte Information für eine Kalibrierung und/oder Validierung des Temperatursensors 7 mittels des Referenzelements 8 hergeleitet werden, da, wie oben beschrieben, aufgrund der Strömung des Mediums 5 die am Ort des Referenzelements 8 vorherrschende Temperatur der am Ort des Temperatursensors 7 vorherrschenden Temperatur nacheilt.

Das dynamische Modell ist nun beispielsweise dazu ausgestaltet, einen geeigneten Korrekturwert, beispielsweise einen Temperatur-Korrekturwert ΔT_{dyn} oder einen Zeit-Korrekturwert anzugeben, welcher Korrekturwert den Einfluss der inhomogenen Wärmeströmung bzw. Wärmeausbreitung innerhalb des Thermometers 1, insbesondere innerhalb des Sensorkopfes 3, berücksichtigt. Das Modell ist sowohl anwendbar für den Fall von einem zumindest zeitweise und/oder teilweise inhomogenen Temperaturfeld, welches durch ein Medium (beispielsweise für eine Anwendung in einem strömenden Medium) oder welches durch die Umgebung des Thermometers (beispielsweise Wärmeableitung) verursacht wird.

Der jeweilige Korrekturwert fließt dann in die Bestimmung einer ggf. vorliegenden Abweichung zwischen der Sensortemperatur Tₘ und der Phasenübergangstemperatur Tₚₕ ein: beispielsweise wird die Abweichung anhand einer der beiden Gleichungen ΔT= T_{mdyn}(tₘ-Δt_{dyn})-Tₚₕ(tₚₕ), oder ΔT= Tₘ(tₘ)- ΔT_{dyn} -Tₚₕ(tₚₕ) bestimmt. Alternativ können die Korrekturwerte auch jeweils geeignet addiert werden.

### Bezugszeichenliste

- 1: Thermometereinsatz
- 2: Schutzrohr
- 3: Sensorkopf
- 4: Elektronikeinheit
- 5: Medium
- 6: Füllstoff
- 7: Temperatursensor
- 8: Referenzelement
- 9,9a-9d: Anschlussleitungen des Referenzelements
- 10: Anschlussleitungen des Temperatursensors
- W: Wärmeausbreitung innerhalb des Sensorkopfes
- T, T₁, T₂, T₃: erste, zweite, dritte Temperatur
- Tₚₕ: Phasenübergangstemperatur
- tₚₕ: Phasenübergangs-Zeitpunkt tₚₕ
- t: Zeit
- Δt_{dyn}: Korrekturwert des dynamischen Modells für die Zeitdauer
- ΔT_{dyn}: Korrekturwert des dynamischen Modells für die Zeitdauer
- G: Referenzgröße

## Patentansprüche

1. Verfahren zur in situ Kalibrierung und/oder Validierung eines Thermometers (1) mit zumindest einem Temperatursensor (7) und zumindest einem Referenzelement (8), welches Referenzelement (8) zumindest teilweise aus einem Material besteht, für welches Material innerhalb des für den Betrieb des Thermometers (1) relevanten Temperaturbereichs zumindest ein Phasenübergang bei zumindest einer vorgegebenen Phasenübergangstemperatur (Tₚₕ) stattfindet, bei welchem Phasenübergang das Material in der festen Phase verbleibt,
umfassend folgende Verfahrensschritte
- Detektieren und/oder Aufzeichnen zumindest eines von dem Temperatursensor (7) erhaltenen Messwertes (Tₘ), insbesondere als Funktion der Zeit (Tₘ(t)),
- Detektieren und/oder Aufzeichnen zumindest einer charakteristischen physikalischen oder chemischen Referenzgröße (G) des Referenzelements (8), insbesondere als Funktion der Zeit (G(t)),
- Detektieren des Stattfindens des Phasenübergangs anhand einer, insbesondere sprunghaften, Änderung der Referenzgröße (G),
- Ermitteln eines Phasenübergangszeitpunkts (tₚₕ), zu welchem der Phasenübergang stattgefunden hat,
- Bestimmen einer Sensortemperatur (Tₘ) aus einem vom Temperatursensor (7) erhaltenen Messwert zu einem Messzeitpunkt (tₘ), welcher den kürzesten zeitlichen Abstand zum Phasenübergangszeitpunkt (tₚₕ) aufweist, und
Vergleichen der Sensortemperatur (Tₘ) mit der Phasenübergangstemperatur (Tₚₕ) und/oder Bestimmung einer ggf. vorliegenden Abweichung (ΔT) zwischen der Sensortemperatur Tₘ) und der Phasenübergangstemperatur (Tₚₕ), wobei zur Bestimmung einer vorliegenden Abweichung (ΔT) zwischen der Sensortemperatur (Tₘ) und der Phasenübergangstemperatur (Tₚₕ) ein Modell der dynamischen Wärmeströmung berücksichtigt wird,
welches Modell eine inhomogene und/oder dynamische Wärmeausbreitung innerhalb des Thermometers, also am Ort des Temperatursensors und/oder am Ort des Referenzelements, und Effekte eine Wärmableitung, welche durch Änderungen in der Umgebungstemperatur hervorgerufen werden können, berücksichtigt.

2. Verfahren nach Anspruch 1,
wobei es sich bei dem zumindest einen Material um ein ferroelektrisches Material, um ein ferromagnetisches Material, oder um ein supraleitendes Material handelt.

3. Verfahren nach Anspruch 1 oder 2,
wobei die zumindest eine charakteristische, physikalische oder chemische Größe (G) gegeben ist durch die Kristallstruktur, das Volumen, eine dielektrische, elektrische, oder magnetische Eigenschaft des jeweiligen Materials.

4. Verfahren nach zumindest einem der vorhergehenden Ansprüche,
wobei die Temperatur anhand eines Vergleichs zumindest eines von dem Temperatursensor (7) erhaltenen Messwertes (Tₘ) zu einem Messzeitpunkt (tₘ) mit einer Temperatursensor-Kennlinie ermittelt wird.

5. Verfahren nach Anspruch 4,
wobei aus einer vorliegenden Abweichung zwischen der Sensortemperatur (Tₘ) und der Phasenübergangstemperatur (Tₚₕ) auf eine Änderung der Temperatursensor-Kennlinie geschlossen wird.

6. Verfahren nach Anspruch 1,
wobei anhand des Modells der dynamischen Wärmeströmung ein Zeit-Korrekturwert (Δt_{dyn}) ermittelt wird, nach welcher das Referenzelement (8) und der Temperatursensor (7) die gleiche Temperatur erreichen,
und wobei zur Bestimmung einer vorliegenden Abweichung (ΔT) zwischen der Sensortemperatur (Tₘ) und der Phasenübergangstemperatur (Tₚₕ) der Zeit-Korrekturwert (Δt_{dyn}) berücksichtigt wird.

7. Verfahren nach Anspruch 1 oder 6,
wobei anhand des Modells der dynamischen Wärmeströmung ein Temperatur-Korrekturwert (ΔT_{dyn}) ermittelt wird, welcher zu einem bestimmbaren Zeitpunkt zwischen dem Referenzelement (8) und dem Temperatursensor (7) vorliegt, und wobei zur Bestimmung einer vorliegenden Abweichung (ΔT) zwischen der Sensortemperatur (Tₘ) und der Phasenübergangstemperatur (Tₚₕ) der Temperatur-Korrekturwert (ΔT_{dyn}) berücksichtigt wird.

8. Verfahren nach zumindest einem der Ansprüche 1,6 oder 7,
wobei es sich bei dem Modell um ein parametrisches Modell handelt.

9. Vorrichtung zur in situ Kalibrierung und/oder Validierung eines Thermometers (1) umfassend zumindest
einen Temperatursensor (7),
ein Referenzelement (8), welches Referenzelement (8) zumindest teilweise aus einem Material besteht, für welches Material innerhalb des für den Betrieb des Thermometers (1) relevanten Temperaturbereichs zumindest ein Phasenübergang bei zumindest einer vorgegebenen Phasenübergangstemperatur (Tₚₕ) auftritt, bei welchem Phasenübergang das Material in der festen Phase verbleibt, und
eine Elektronikeinheit (4), welche Elektronikeinheit (4) dazu ausgestaltet ist, zumindest ein Verfahren nach zumindest einem der vorhergehenden Ansprüche auszuführen.

## Claims

1. A method for the in-situ calibration and/or validation of a thermometer (1) with at least a temperature sensor (7) and at least a reference element (8), said reference element (8) consisting at least partly of a material, for which material at least one phase transition occurs within the temperature range relevant to the operation of the thermometer (1) at at least one prespecified phase transition temperature (Tₚₕ), during which phase transition the material remains in the solid phase, comprising the following process steps
- Detecting and/or recording at least one measured value (Tₘ) received by the temperature sensor (7), in particular as a function of time (Tₘ(t)),
- Detecting and/or recording at least one characteristic physical or chemical reference variable (G) of the reference element (8), in particular as a function of time (Tm(t)),
- Detecting the occurrence of the phase transition based on a change in the reference variable (G), in particular a dramatic change,
- Determining a phase transition time point (tₚₕ) at which the phase transition took place,
- Determining a sensor temperature (Tₘ) from a measured value received by the temperature sensor (7) at a measurement time point (tₘ) which is the closest to the phase transition time point (tₚₕ), and
Comparing the sensor temperature (Tₘ) with the phase transition temperature (Tₚₕ) and/or determining any deviation (ΔT) between the sensor temperature (Tₘ) and the phase transition temperature (Tₚₕ), wherein a model of dynamic heat convection is taken into consideration to determine any deviation (ΔT) between the sensor temperature (Tₘ) and the phase transition temperature (Tₚₕ),
said model considering an inhomogeneous and/or dynamic heat propagation within the thermometer, i.e. at the location of the temperature sensor and/or at the location of the reference element, and effects of heat dissipation which may be caused by changes in the ambient temperature.

2. The method as claimed in claim 1,
wherein the at least one material is a ferroelectric material, a ferromagnetic material or an ultra-conductive material.

3. The method as claimed in claim 1 or 2,
wherein the at least one characteristic, physical or chemical variable (G) is given by the crystal structure, the volume, a dielectric or magnetic property of the respective material.

4. The method as claimed in at least one of the preceding claims,
wherein the temperature is determined by means of a comparison between at least one measured value (Tₘ) received by the temperature sensor (7) at a measurement time point (tₘ) using a temperature sensor characteristic curve.

5. The method as claimed in claim 4,
wherein any deviation between the sensor temperature (Tₘ) and the phase transition temperature (Tₚₕ) is indicative of a change in the temperature sensor characteristic curve.

6. The method as claimed in claim 1,
wherein the model of dynamic heat convection is used to determine a time correction value (Δt_{dyn}), after which the reference element (8) and the temperature sensor (7) reach the same temperature,
and wherein the time correction value (Δt_{dyn}) is taken into consideration to determine any deviation (ΔT) between the sensor temperature (Tₘ) and the phase transition temperature (Tₚₕ).

7. The method as claimed in claim 1 or 6,
wherein the model of dynamic heat convection is used to determine a temperature correction value (Δt_{dyn}) which is present at a determinable time point between the reference element (8) and the temperature sensor (7), and wherein the temperature correction value (Δt_{dyn}) is taken into consideration to determine any deviation (ΔT) between the sensor temperature (Tₘ) and the phase transition temperature (Tₚₕ).

8. The method as claimed in at least one of claims 1, 6 or 7, wherein
the model is a parametric model.

9. A device for the in-situ calibration and/or validation of a thermometer (1)
comprising at least
a temperature sensor (7),
a reference element (8), said reference element (8) consisting at least partly of a material, for which material at least one phase transition occurs within the temperature range relevant to the operation of the thermometer (1) at at least one prespecified phase transition temperature (Tₚₕ), during which phase transition the material remains in the solid phase, and
an electronic unit (4), said electronic unit (4) being configured to perform at least one method as claimed in at least one of the preceding claims.

## Revendications

1. Procédé destiné à l'étalonnage et/ou à la validation sur site d'un thermomètre (1) avec au moins un capteur de température (7) et au moins un élément de référence (8), lequel élément de référence (8) est constitué au moins partiellement d'un matériau, matériau pour lequel, à l'intérieur de la gamme de température pertinente pour le fonctionnement du thermomètre (1), il se produit au moins une transition de phase à au moins une température de transition de phase (Tₚₕ) prédéfinie, transition de phase lors de laquelle le matériau reste en phase solide,
lequel procédé comprend les étapes suivantes :
- Détection et/ou enregistrement d'au moins une valeur mesurée (Tₘ) obtenue par le capteur de température (7), notamment en fonction du temps (Tₘ(t)),
- Détection et/ou enregistrement d'au moins une grandeur de référence (G) caractéristique, physique ou chimique de l'élément de référence (8), notamment en fonction du temps (G(t)),
- Détection de l'occurrence de la transition de phase à l'aide d'une variation, notamment brusque, de la grandeur de référence (G),
- Détermination d'un moment de transition de phase (tₚₕ) auquel la transition de phase a eu lieu,
- Détermination d'une température de capteur (Tₘ) à partir d'une valeur mesurée obtenue par le capteur de température (7) à un instant de mesure (tₘ) qui présente l'intervalle de temps le plus court par rapport au moment de transition de phase (tₚₕ), et
comparaison de la température de capteur (Tₘ) avec la température de transition de phase (Tₚₕ) et/ou détermination d'un éventuel écart de température (ΔT) existant entre la température de capteur (Tₘ) et la température de transition de phase (Tₚₕ), procédé pour lequel, pour déterminer un écart (ΔT) existant entre la température de capteur (Tₘ) et la température de transition de phase (Tₚₕ), on tient compte d'un modèle de flux thermique dynamique,
lequel modèle tient compte d'une propagation inhomogène et/ou dynamique de la chaleur à l'intérieur du thermomètre, c'est-à-dire à l'emplacement du capteur de température et/ou à l'emplacement de l'élément de référence, ainsi que des effets d'une dissipation de chaleur pouvant être provoqués par des modifications de la température ambiante.

2. Procédé selon la revendication 1,
pour lequel l'au moins un matériau est un matériau ferroélectrique, un matériau ferromagnétique ou un matériau supraconducteur.

3. Procédé selon la revendication 1 ou 2,
pour lequel l'au moins une grandeur caractéristique, physique ou chimique (G) est donnée par la structure cristalline, le volume, une propriété diélectrique, électrique ou magnétique du matériau respectif.

4. Procédé selon au moins l'une des revendications précédentes,
pour lequel la température est déterminée à l'aide d'une comparaison d'au moins une valeur mesurée (Tₘ) obtenue par le capteur de température (7) à un instant de mesure (tₘ) avec une courbe caractéristique du capteur de température.

5. Procédé selon la revendication 4,
pour lequel on déduit une modification de la courbe caractéristique du capteur de température à partir d'un écart existant entre la température de capteur (Tₘ) et la température de transition de phase (Tₚₕ).

6. Procédé selon la revendication 1,
pour lequel on détermine, à l'aide du modèle de flux thermique dynamique, une valeur de correction temporelle (Δt_{dyn}) après laquelle l'élément de référence (8) et le capteur de température (7) atteignent la même température, et
pour lequel on tient compte de la valeur de correction temporelle (Δt_{dyn}) pour déterminer un écart (ΔT) existant entre la température de capteur (Tₘ) et la température de transition de phase (Tₚₕ).

7. Procédé selon la revendication 1 ou 6,
pour lequel on détermine, à l'aide du modèle de flux thermique dynamique, une valeur de correction de température (ΔT_{dyn}), laquelle valeur est présente à un moment déterminable entre l'élément de référence (8) et le capteur de température (7), et
pour lequel on tient compte de la valeur de correction de température (ΔT_{dyn}) pour déterminer un écart (ΔT) présent entre la température de capteur (Tₘ) et la température de transition de phase (Tₚₕ).

8. Procédé selon au moins l'une des revendication 1, 6 ou 7 pour lequel le modèle est un modèle paramétrique.

9. Dispositif destiné à l'étalonnage et/ou la validation sur site d'un thermomètre (1) comprenant au moins
un capteur de température (7),
un élément de référence (8), lequel élément de référence (8) est constitué au moins partiellement d'un matériau, matériau pour lequel, à l'intérieur de la gamme de température pertinente pour le fonctionnement du thermomètre (1), au moins une transition de phase se produit à au moins une température de transition de phase (Tₚₕ) prédéfinie, transition de phase pour laquelle le matériau reste en phase solide, et
une unité électronique (4), laquelle unité électronique (4) est conçue pour mettre en oeuvre au moins un procédé selon au moins l'une des revendications précédentes.
